# EUROPEAN PATENT APPLICATION

(11) **EP 3 447 099 A1**
(43) Date of publication of application: **27.02.2019**
(21) Application number: 18189683.8
(22) Date of filing: 20.08.2018
(51) Int. Cl.: C09D 163/00, B64D 33/00, C08G 65/00

(54) **LAMINAR FLOW COATING FOR AERODYNAMIC SURFACES**

(30) Priority: 22.08.2017 US 201715682916
(71) Applicant: Rohr, Inc., Chula Vista, CA 91910-2098 (US)
(72) Inventor: POTEET, Steven, 06518, CT Connecticut Hamden (US); PUJAR, Vijay V., San Diego, CA California 92127 (US); VICTOR, Jared, San Diego, CA California 92101 (US)
(74) Representative: Dehns

(57) **Abstract**

A laminar flow coating (100) for aerodynamic surfaces is provided. The laminar flow coating may comprise a base composition (110), such as an epoxy composition, a fluoropolyurethane composition, or a polyurethane composition. A filler composition (120) may be dispersed within the base composition (110). The filler composition (120) may comprise at least one of a nanomaterial composition or a microfiller composition. The filler composition (120) may be doped with a hydrophobic surface modifier prior to being dispersed within the base composition (110).

## Description

### FIELD

The present disclosure relates to laminar flow coatings, and more specifically, to a laminar flow coating for aircraft aerodynamic surfaces.

### BACKGROUND

Natural laminar flow is the smooth, uninterrupted flow of air over a surface, such as an inlet of a nacelle, contours of wings, an empennage of a tail, or other aerodynamic surfaces of an aircraft during flight. Advancements in aerospace engines have typically reduced the tolerances allowed for aerodynamic surfaces, thus increasing the importance of natural laminar flow over such surfaces. Insect impacts on the aerodynamic surfaces during taxiing, ascent, or descent of the aircraft may disturb the natural laminar flow and lead to a loss in aircraft fuel efficiency. Current solutions typically involve coating aerodynamic surfaces with a hydrophobic coating to at least partially mitigate insect residue and debris from sticking on to the aerodynamic surfaces. However, hydrophobic-only coatings on aerodynamic surfaces may erode during rain, hail, or the like, thus repeated coatings may be used in response to the potential for erosion.

### SUMMARY

In various embodiments, a laminar flow coating is disclosed. The laminar flow coating may comprise a base composition comprising at least one of an epoxy composition, a fluoropolyurethane composition, or a polyurethane composition; and a filler composition comprising at least one of a nanomaterial composition or a microfiller composition, wherein the filler composition is doped with a hydrophobic surface modifier and is dispersed within the base composition.

In various embodiments, the nanomaterial composition may comprise at least one of a graphene nanoplatelet, a graphene nanosheet, a metal oxide particulate, a nanoclay, or a hexagonal boron nitride nanosheet. The microfiller composition may comprise at least one of a metal oxide, polytetrafluoroethylene (PTFE), fluoroethylene propylene (FEP), polyvinylidene fluoride (PVDF), or fluoroalkoxy polymer. In various embodiments, the hydrophobic surface modifier may comprise an organic molecule or an inorganic molecule containing a hydrolysable unit and a long chain alkane unit that can be at least one of hydrogenated or fluorinated. The hydrophobic surface modifier comprises at least one of an organic ligand or an inorganic ligand. The organic ligand may comprise at least one of dodecylamine, perfluorododecylamine, octylamine, 1H,1H-Perfluorooctylamine, or oleic acid, and the inorganic ligand may comprise at least one of a titanate functional agent, a phosphonate functional agent, a silane functional agent, or a perfluorosilane functional agent. The filler composition may be dispersed within the base composition using at least one of a sonication processing method or a high shear mixing method.

In various embodiments, a nacelle is disclosed. The nacelle may comprise an aerodynamic surface and a laminar flow coating coupled to the aerodynamic surface. The laminar flow coating may comprise: a base composition comprising at least one of an epoxy composition, a fluoropolyurethane composition or a polyurethane composition; and a filler composition comprising at least one of a nanomaterial composition or a microfiller composition, wherein the filler composition is doped with a hydrophobic surface modifier and is dispersed within the base composition.

In various embodiments, the nanomaterial composition may comprise at least one of a graphene nanoplatelet, a graphene nanosheet, a metal oxide particulate, a nanoclay, or a hexagonal boron nitride nanosheet. The microfiller composition may comprise at least one of a metal oxide, polytetrafluoroethylene (PTFE), fluoroethylene propylene (FEP), polyvinylidene fluoride (PVDF), or fluoroalkoxy polymer. In various embodiments, the hydrophobic surface modifier may comprise at least one of an organic ligand or an inorganic ligand. The organic ligand may comprise at least one of dodecylamine, perfluorododecylamine, octylamine, 1H,1H-Perfluorooctylamine, or oleic acid, and the inorganic ligand may comprise at least one of a titanate functional agent, a phosphonate functional agent, a silane functional agent, or a perfluorosilane functional agent. The laminar flow coating may comprise a thickness on the aerodynamic surface of about 0.0254 mm (0.001 inch) to about 0.635 mm (0.025 inch). The nacelle may further comprise an inlet having a leading edge. The aerodynamic surface may comprise the leading edge of the inlet.

In various embodiments, a method is disclosed. The method may comprise the steps of: preparing a base composition, wherein the base composition comprises at least one of an epoxy composition, a fluoropolyurethane composition, or a polyurethane composition; dispersing a filler composition into the base composition to form a laminar flow slurry, wherein the filler composition comprises at least one of a nanomaterial composition or a microfiller composition; at least one of applying the laminar flow slurry on to an aerodynamic surface or preparing a laminar coating film from the laminar flow slurry and applying the laminar coating film on to the aerodynamic surface; and curing at least one of the laminar flow slurry or the laminar coating film to form a laminar flow coating.

In various embodiments, the method may further comprise the step of: doping the filler composition with a hydrophobic surface modifier. The hydrophobic surface may modifier comprise at least one of an organic ligand or an inorganic ligand, the organic ligand may comprise at least one of dodecylamine, perfluorododecylamine, octylamine, 1H,1H-Perfluorooctylamine, or oleic acid, and the inorganic ligand may comprise at least one of a titanate functional agent, a phosphonate functional agent, a silane functional agent, or a perfluorosilane functional agent. The nanomaterial composition may comprise at least one of a graphene nanoplatelet, a graphene nanosheet, a metal oxide particulate, a nanoclay, or a hexagonal boron nitride nanosheet. The microfiller composition may comprise at least one of a metal oxide, polytetrafluoroethylene (PTFE), fluoroethylene propylene (FEP), polyvinylidene fluoride (PVDF), or fluoroalkoxy polymer. The base composition may be prepared by mixing a base component and an activator component, and the filler composition may be dispersed into the base component prior to the base component being mixed with the activator component. The filler composition may be mixed into an external solvent prior to being dispersed within the base composition.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a perspective view of a nacelle for an aircraft, in accordance with various embodiments;
FIG. 2 illustrates a forward to aft view of a portion of a nacelle inlet having a laminar flow coating, in accordance with various embodiments; and
FIG. 3 illustrates a process flow for a method of forming a laminar flow coating on an aerodynamic surface of an aircraft, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical, chemical, and mechanical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact.

All ranges may include upper and lower values, and all ranges and ratio limits disclosed herein may be combined. It is to understood that unless specifically stated otherwise, references to "a," "an," and/or "the" may include one or more than one and that reference to an item in the singular may also include the item in the plural.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

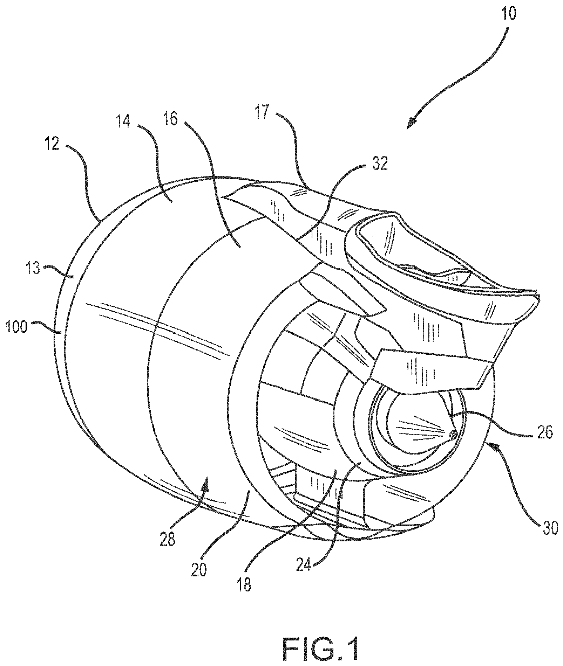

Referring to FIG. 1, a nacelle 10 for a gas turbine engine is illustrated according to various embodiments. Nacelle 10 may comprise an inlet 12, a fan cowl 14, and a thrust reverser 16. Nacelle 10 may be coupled to a pylon 17, which may mount the nacelle 10 to an aircraft wing or aircraft body. Thrust reverser 16 may comprise an inner fixed structure ("IFS") 18 and an outer fixed structure ("OFS") 20. Bypass air from an engine fan may flow in a generally annular bypass air duct defined between the IFS 18 and the OFS 20. The IFS 18 may be formed together with or be coupled to, at its aft end, a core cowl 24, which in turn is adjacent to an exhaust nozzle 26 through which flows core engine exhaust air. The thrust reverser 16 may further be split into a left half 28 and a right half 30, such that there is, for example, a left half and a right half of IFS 18. The left half 28 and the right half 30 may be hinged to the pylon 17 at hinges 32. The left half 28 and the right half 30 may hinge open at hinges 32 in order to provide access to the engine for inspection or servicing. The left and right halves of the IFS 18 may together help form a core compartment around the engine when the left and right halves 28, 30 of the thrust reverser are closed.

In various embodiments, nacelle 10 may comprise a leading edge 13. Leading edge 13 may define a portion of nacelle 10 extending in an aft direction from inlet 12 towards fan cowl 14. In that respect, leading edge 13 may define an aerodynamic surface of nacelle 10 wherein an increase in natural laminar flow may lead to an increase in fuel efficiency in a gas turbine engine.

In various embodiments, aerodynamic surfaces of an aircraft, such as leading edge 13 of nacelle 10 and portions of inlet 12 and/or fan cowl 14 aft of leading edge 13, contours of aircraft wings, an empennage of a tail, or the like, may be exposed to insect impact and residue during flight. Insect residue build-up comprising heights as low as 0.0762 mm (0.003 inch) may disrupt the natural laminar flow over the aerodynamic surfaces leading to a loss in fuel efficiency. Therefore, the aerodynamic surfaces, including leading edge 13 of nacelle 10 and/or portions of inlet 12 and/or fan cowl 14 aft of leading edge 13, may comprise a laminar flow coating 100 configured to provide a barrier against insect residue adhesion. In various embodiments, laminar flow coating 100 may also be applied to any other suitable surface of nacelle 10, or an aircraft, such as inlet 12, fan cowl 14, and thrust reverser 16. In that regard, laminar flow coating 100 may provide a low surface energy coating (e.g., exhibited by the filler materials) that can at least partially mitigate insect residue adhesion on leading edge 13 while also surviving weather conditions during flight (e.g., rain erosion, hail erosion, etc.). For example, laminar flow coating 100 may provide a low surface energy coating due at least partially to the inherent energy absorbing nature of base composition 110 (e.g., polyurethane materials, as discussed further herein). It should be appreciated that while this disclosure is described in the context of aerodynamic surfaces on an aircraft, and more specifically to leading edge 13 of nacelle 10, the systems and methods described herein may be implemented in various other contexts (e.g., other aerodynamic surfaces in an automobile, boat, wind turbine, or the like wherein use of laminar flow coating 100 may be desired).

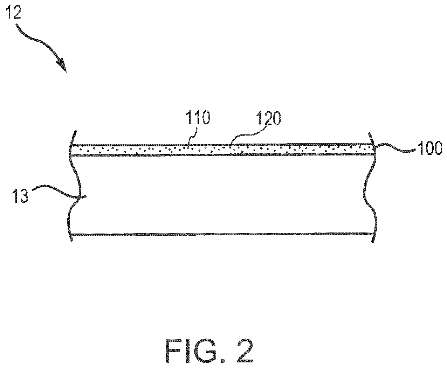

With reference to FIG. 2, laminar flow coating 100 may be applied to leading edge 13 (and/or portions of inlet 12 and/or fan cowl 14 aft of leading edge 13) using any suitable or desired method, such as, for example, spray application, brush application, dip-coating, spin-coating, film layup, or via any other suitable method. As discussed further herein, laminar flow coating 100 may first be mixed and applied to leading edge 13 in a slurry (e.g., a laminar flow slurry). In response to the slurry being cured (e.g., as described herein), laminar flow coating 100 may be formed on to leading edge 13. In various embodiments, the laminar flow slurry may also first be prepared into a laminar coating film prior to being applied to leading edge 13, as discussed further herein. In response to the laminar coating film being cured, laminar flow coating 100 may be formed on to leading edge 13. Laminar flow coating 100 may comprise any suitable or desired thickness. For example, laminar flow coating 100 may comprise a thickness of about 0.0254 mm (0.001 inch) to about 0.1524 mm (0.006 inch), about 0.1524 mm (0.006 inch) to about 0.2032 mm (0.008 inch), 0.2032 mm (0.008 inch) to about 0.381 mm (0.015 inch), or about 0.381 mm (0.015 inch) to about 0.635 mm (0.025 inch) (wherein about as used in this context refers only to +/- 0.0127 mm (0.0005 inch)). In various embodiments, laminar flow coating 100 may comprise a thickness of about 0.1524 mm (0.006 inch) to about 0.254 mm (0.01 inch).

In various embodiments, laminar flow coating 100 may comprise a base composition 110 and a filler composition 120. Base composition 110 may comprise any suitable host composition, such as, for example, a low surface energy, high solids matrix coating. For example, base composition 110 may comprise an epoxy coating, a fluoropolyurethane coating, a polyurethane coating, or any other suitable coating or composition. The fluoropolyurethane coating and/or the polyurethane coating may each comprise various sub-compositions. For example, the fluoropolyurethane coating may comprise a fluoropolyurethane base component and a fluoropolyurethane activator component. The fluoropolyurethane base component may first be agitated or stirred to ensure that solids are uniformly dispersed, prior to the fluoropolyurethane activator component being added and mixed. As a further example, the polyurethane coating may comprise a polyurethane base component, a polyurethane activator component, and a polyurethane thinner component. The polyurethane base component may first be agitated or stirred to ensure that solids are uniformly dispersed, prior to the polyurethane activator component being added and mixed. The polyurethane thinner component may be added to achieve a desired viscosity in base composition 110.

In various embodiments, filler composition 120 may be dispersed within base composition 110 prior to the laminar flow slurry (or the laminar coating film, as discussed further herein) being applied to leading edge 13. Filler composition 120 may be configured to reinforce base composition 110 and to at least partially lower the surface energy in laminar flow coating 100. In that respect, filler composition 120 may comprise nanomaterials and/or microfillers. For example, filler composition 120 may comprise a nanomaterial such as graphene nanoplatelets, graphene nanosheets, metal oxide nanoparticles (e.g., aluminum oxide (Al₂O₃) particulate, silicon dioxide (SiO₂) particulate, titanium dioxide (TiO₂) particulate, or the like, in powder form), nanoclays (e.g., montmorillonite), hexagonal boron nitride nanosheets, or the like. The graphene nanosheets may have a mean diameter of about 1 µm (3.937e-5 inch) to about 25 µm (9.843e-4 inch) and may have a thickness of 1-12 atomic layers. The graphene nanosheets may be dispersed in dimethyl sulfoxide (DMSO) (C₂H₆OS; Chemical Abstracts Service Registry Number 67-68-5), an alcohol, dimethylformamide ((CH₃)₂NCH; Chemical Abstracts Service Registry Number 68-12-2), toluene (C₆H₅-CH₃; Chemical Abstracts Service Registry Number 108-88-3), n-methyl-2-pyrrolidone (NMP) (C₅H₉NO; Chemical Abstracts Service Registry Number 872-50-4), or the like, and may be at least partially oxygenized (containing about 0.1% oxygen to about 15% oxygen (wherein about as used in this context refers only to +/- 0.05%)). In various embodiments, the aluminum oxide may comprise a mean particle size of about 40 nanometers (nm) (1.5748e-6 inch) to about 50 nm (1.9685e-6 inch). In various embodiments, the silicon dioxide may comprise a mean particle size of about 10 nm (3.937e-7 inch) to about 20 nm (7.874e-7 inch). In various embodiments, the titanium dioxide may comprise a mean particle size of about 21 nm (8.2677e-7 inch). In various embodiments, the nanoclay may comprise a mean diameter of less than 25 µm (9.843e-4 inch), and may have a thickness of 1 to 20 atomic layers. In various embodiments, the hexagonal boron nitride nanosheets may comprise a mean diameter of about 1 µm (3.937e-5 inch) to about 13 µm (5.118e-4 inch), and may have a thickness of 5-20 atomic layers. About as used in the above context refers only to +/- 0.5 nm (1.9685e-8 inch).

As a further example, filler composition 120 may comprise a microfiller composition. The microfiller composition may comprise a metal oxide (e.g., silicon dioxide (SiO₂), aluminum oxide (Al₂O₃), or the like), a fluorinated polymer composition (e.g., polytetrafluoroethylene (PTFE) ((C₂F₄)ₙ), polyvinylidene fluoride (PVDF) ((C₂H₂F₂)ₙ), fluoroethylene propylene (FEP), fluoroalkoxy polymer, or the like), and/or the like. The silicon dioxide may comprise a particle size of about 0.5 micrometers (µm) (1.9685e-5 inch) to about 10 µm (0.0003937 inch). The aluminum oxide may comprise a particle size of about 1 µm (3.937e-5 inch) to about 50 µm (0.00197 inch). The PTFE may comprise a particle size of about 1 µm (3.937e-5 inch). About as used in the above context refers only to +/- 0.05 µm (1.9685e-6 inch).

In various embodiments, filler composition 120 may be dispersed into base composition 110 based on a filler loading level. The filler loading level may comprise a percent of filler composition 120 in laminar flow coating 100, with respect to a percent of solid materials in base composition 110 (e.g., a polyurethane base composition may comprise, for example, 36% solid polyurethane, on a weight basis). In that regard, the filler loading level may comprise about 0% to about 10%, about 10% to about 15%, or about 15% to about 20% (wherein about as used in this context refers only to +/- 1%).

In various embodiments, filler composition 120 may be dispersed into base composition 110 to form the laminar flow slurry. For example, filler composition 120 may be dispersed directly into base composition 110. Filler composition 120 may be mixed into base composition 110 using sonication, high shear mixing, a combination of sonication and high shear mixing, or any other suitable mixing or processing method. During a sonication processing method, ultrasonic frequencies may be applied to agitate particles in a solution. For example, filler composition 120 mixed into base composition 110 may undergo the sonication processing method for about 20 minutes to about 180 minutes at an ultrasonic frequency of about 20 kHz to about 40 kHz. In response to using a high shear mixing processing method, filler composition 120 may be mixed into base composition 110 for about 5 minutes to about 20 minutes at a frequency of rotation of about 5,000 RPM to about 10,000 RPM. In that respect, filler composition 120 may be mixed into the base component (e.g., the epoxy base component, the fluoropolyurethane base component, or the polyurethane base component) or the thinner component (e.g., the polyurethane thinner component) of base composition 110.

In various embodiments, filler composition 120 may also be mixed into an external solvent before the solvent is added into base composition 110. For example, the external solvent may comprise n-methylpyrrolidone (C₅H₉NO; Chemical Abstracts Service Registry Number 872-50-4), dimethyl sulfoxide ((CH₃)₂SO), isopropanol, ethanol, water, N,N'-dimethylformamide (HCON(CH₃)₂; Chemical Abstracts Service Registry Number 68-12-2), toluene (Chemical Abstracts Service Registry Number 108-88-3), and/or any suitable combination thereof. In that respect, filler composition 120 may be mixed into the external solvent, and the solvent/filler composition mixture may then be dispersed into base composition 110. For example, the solvent/filler composition mixture may be added to the base component (e.g., the epoxy base component, the fluoropolyurethane base component, or the polyurethane base component) or the thinner component (e.g., the polyurethane thinner component) of base composition 110.

In various embodiments, filler composition 120 may also be doped with a hydrophobic surface modifier. For example, filler composition 120 may be doped prior to being dispersed into base composition 110. In that respect, the hydrophobic surface modifier may be configured to bond with the particles in filler composition 120 to further reduce the surface energy in filler composition 120. Moreover, doping filler composition 120 with the hydrophobic surface modifier may also aid in creating a strong covalent bond between base composition 110 and filler composition 120 to further enhance weather erosion resistance.

In various embodiments, filler composition 120 may comprise any suitable hydrophobic surface modifier. For example, filler composition 120 may comprise an organic molecule or an inorganic molecule containing a hydrolysable unit (e.g., methoxy, ethoxy, amine, halogen, carboxylic acid, or the like), and a long chain alkane unit (CₙH₂ₙ₊₂, where 20 < n > 8) that can be hydrogenated, fluorinated, or a combination thereof. For example, filler composition 120 may include organic ligands and/or inorganic ligands. The organic ligands may comprise any suitable hydrogenated or fluorinated alkane unit (e.g., linear, branched, or a combination thereof) that contains a long chain alkane unit (CₙH₂ₙ₊₂, wherein 20 < n > 8) and a hydrolysable unit (e.g., methoxy, ethoxy, amine, halogen, carboxylic acid, or the like). For example, the organic ligand may comprise dodecylamine (C₁₂H₂₇N; Chemical Abstracts Service Registry Number 124-22-1), perfluorododecylamine (C₁₂H₄F₂₃N), octylamine (C₈H₁₉N; Chemical Abstracts Service Registry Number 111-86-4), 1H,1H-Perfluorooctylamine (C₈H₄F₁₅N), oleic acid (C₁₈H₃₄O₂; Chemical Abstracts Service Registry Number 112-80-1), and/or any other suitable organic ligand.

The inorganic ligands may comprise, for example, titanate functional agents, phosphonate functional agents, silane functional agents, or perfluorosilane functional agents. For example, the silane functional agents may comprise functional units such as epoxides, amines, or the like that are useful based on the filler composition 120. The silane functional agent may comprise, for example, (3-Glycidoxypropyl)trimethoxysilane (C₉H₂₀O₅Si; Chemical Abstracts Service Registry Number 2530-83-8), [3-(2-Aminoethylamino)propyl]trimethoxysilane (C₈H₂₂N₂O₃Si; Chemical Abstracts Service Registry Number 1760-24-3), or (3-Aminopropyl)triethoxysilane (C₉H₂₃NO₃Si; Chemical Abstracts Service Registry Number 919-30-2). The perfluorosilane functional agent may comprise any suitable fluorinated silane (whether linear, branched, or a combination thereof), such as, for example a fluorinated silane having a short alkyl chain (e.g., CₙF₂ₙ₊₂, wherein n =< 4) (e.g., Trichloro(3,3,3-trifluoropropyl)silane (C₆H₁₃CL₃F₃O₃Si; Chemical Abstracts Service Registry Number 429-60-7)), or a fluorinated silane having a long alkyl chain (e.g., CₙF₂ₙ₊₂, wherein n = 8-20) (e.g., 1H, 1H, 2H, 2H-Perfluorooctyltriethoxysilane (C₁₄H₁₉F₁₃O₃Si; Chemical Abstracts Service Registry Number 51851-37-7)). The perfluorosilane functional agent may contain one, two, or three hydrolysable units comprising of methoxy (-OCH₃), ethoxy (-OCH₂CH₃), or halide such as chloride (-Cl), or any combination thereof.

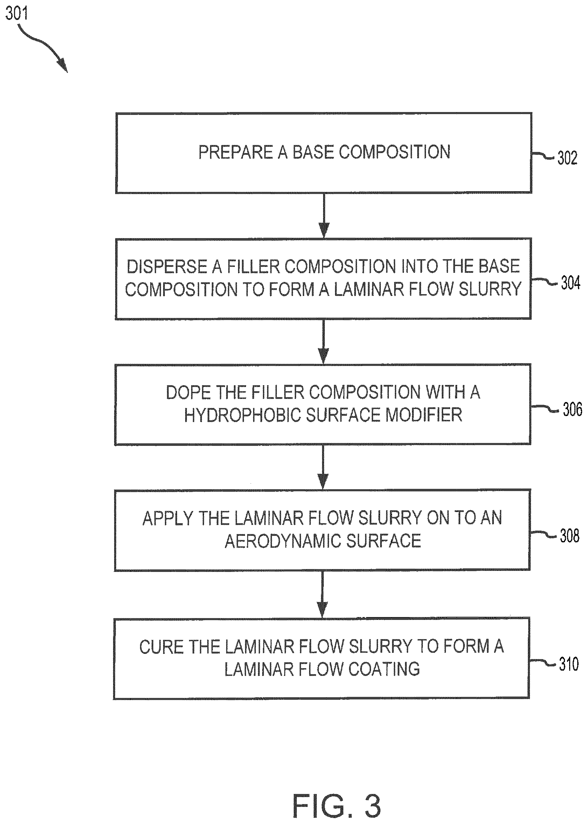

In various embodiments, and with reference to FIG. 3, a method 301 for forming a laminar flow coating on an aerodynamic surface of an aircraft is disclosed. Method 301 may comprise preparing a base composition (step 302). The base composition may be any of the base composition materials discussed herein. Method 301 may comprise dispersing a filler composition into the base composition to form a laminar flow slurry (step 304). The filler composition may be any of the filler composition materials discussed herein. The filler composition may be mixed directly into the base composition using any processing or mixing method discussed herein, such as via a sonication processing method or a high shear mixing method. The filler composition may also be first mixed into an external solvent prior to being mixed into the base composition, as discussed further herein. The filler composition may be added based on a filler loading level.

Method 301 may comprise doping the filler composition with a hydrophobic surface modifier (step 306). For example, the filler composition may be doped with the hydrophobic surface modifier prior to the filler composition being dispersed into the base composition (e.g., prior to the formation of the laminar flow slurry in step 304). In that respect, the filler composition may be chemically altered by the hydrophobic surface modifier to reinforce the filler composition particles and reduce surface energy. The hydrophobic surface modifier may be any of the hydrophobic surface modifiers discussed herein, such as an organic ligand, a silane functional agent, or a perfluorosilane functional agent.

In various embodiments, method 301 may comprise applying the laminar flow slurry to an aerodynamic surface (step 308). In that regard, the laminar flow slurry may be applied to an aerodynamic surface of an aircraft, such as leading edge 13 of nacelle 10, with brief reference to FIG. 1. Any suitable amount of the laminar flow slurry may be applied. For example, the laminar flow slurry may be applied to form a layer of about 0.0508 mm (0.002 inch) to about 0.1524 mm (0.006 inch), about 0.1524 mm (0.006 inch) to about 0.2032 mm (0.008 inch), 0.2032 mm (0.008 inch) to about 0.381 mm (0.015 inch), or about 0.381 mm (0.015 inch) to about 0.635 mm (0.025 inch) on the aerodynamic surface (wherein about as used in this context refers only to +/- 0.0127 mm (0.0005 inch)). In various embodiments, the laminar flow slurry may first be prepared into a laminar coating film prior to being applied to the aerodynamic surface. The laminar coating film may be applied to the aerodynamic surface by itself or with an adhesive.

Method 301 may comprise curing the laminar flow slurry to form a laminar flow coating (step 310). For example, the slurry may be left to dry and cure for a period of about one day to about three days, about three days to about five days, or about five days to about seven days, or any other suitable amount of time. In other words, drying the laminar flow slurry forms the laminar flow coating. In various embodiments, in response to the laminar flow slurry first being prepared into the laminar coating film prior to being applied to the aerodynamic surface, the laminar coating film may be cured to form the laminar flow coating. For example, the laminar coating film may be left to dry and cure for a period of about one day to about three days, about three days to about five days, or about five days to about seven days, or any other suitable amount of time. In other words, drying the laminar coating film forms the laminar flow coating.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A laminar flow coating (100), comprising:
a base composition (110) comprising at least one of an epoxy composition, a fluoropolyurethane composition, or a polyurethane composition; and
a filler composition (120) comprising at least one of a nanomaterial composition or a microfiller composition, wherein the filler composition is doped with a hydrophobic surface modifier and is dispersed within the base composition.

2. The laminar flow coating of claim 1, wherein the nanomaterial composition comprises at least one of a graphene nanoplatelet, a graphene nanosheet, a metal oxide particulate, a nanoclay, or a hexagonal boron nitride nanosheet.

3. The laminar flow coating of claims 1 or 2, wherein the microfiller composition comprises at least one of a metal oxide, polytetrafluoroethylene (PTFE), fluoroethylene propylene (FEP), polyvinylidene fluoride (PVDF), or fluoroalkoxy polymer.

4. The laminar flow coating of any preceding claim, wherein the hydrophobic surface modifier comprises an organic molecule or an inorganic molecule containing a hydrolysable unit and a long chain alkane unit that can be at least one of hydrogenated or fluorinated.

5. The laminar flow coating of any preceding claim, wherein the hydrophobic surface modifier comprises at least one of an organic ligand or an inorganic ligand, and preferably wherein the organic ligand comprises at least one of dodecylamine, perfluorododecylamine, octylamine, 1H,1H-Perfluorooctylamine, or oleic acid, and wherein the inorganic ligand comprises at least one of a titanate functional agent, a phosphonate functional agent, a silane functional agent, or a perfluorosilane functional agent.

6. The laminar flow coating of any preceding claim, wherein the filler composition (120) is dispersed within the base composition (110) using at least one of a sonication processing method or a high shear mixing method.

7. A nacelle (10), comprising:
an aerodynamic surface; and
a laminar flow coating (100) of any preceding claim coupled to the aerodynamic surface.

8. The nacelle of claim 7, wherein the laminar flow coating (100) comprises a thickness on the aerodynamic surface of about 0.0254 mm (0.001 inch) to about 0.635mm (0.025 inch).

9. The nacelle of claims 7 or 8, further comprising an inlet (12) having a leading edge (13), wherein the aerodynamic surface comprises the leading edge of the inlet.

10. A method, comprising:
preparing a base composition, wherein the base composition comprises at least one of an epoxy composition, a fluoropolyurethane composition, or a polyurethane composition;
dispersing a filler composition into the base composition to form a laminar flow slurry, wherein the filler composition comprises at least one of a nanomaterial composition or a microfiller composition;
at least one of applying the laminar flow slurry on to an aerodynamic surface or preparing a laminar coating film from the laminar flow slurry and applying the laminar coating film on to the aerodynamic surface; and
curing at least one of the laminar flow slurry or the laminar coating film to form a laminar flow coating.

11. The method of claim 10, further comprising doping the filler composition with a hydrophobic surface modifier, wherein the hydrophobic surface modifier comprises at least one of an organic ligand or an inorganic ligand, wherein the organic ligand comprises at least one of dodecylamine, perfluorododecylamine, octylamine, 1H,1H-Perfluorooctylamine, or oleic acid, and wherein the inorganic ligand comprises at least one of a titanate functional agent, a phosphonate functional agent, a silane functional agent, or a perfluorosilane functional agent.

12. The method of claim 11, wherein the nanomaterial composition comprises at least one of a graphene nanoplatelet, a graphene nanosheet, a metal oxide particulate, a nanoclay, or a hexagonal boron nitride nanosheet.

13. The method of claim 11, wherein the microfiller composition comprises at least one of a metal oxide, polytetrafluoroethylene (PTFE), fluoroethylene propylene (FEP), polyvinylidene fluoride (PVDF), or fluoroalkoxy polymer.

14. The method of any of claims 10 to 13, wherein the base composition is prepared by mixing a base component and an activator component, and wherein the filler composition is dispersed into the base component prior to the base component being mixed with the activator component.

15. The method of any of claims 10 to 14, wherein the filler composition is mixed into an external solvent prior to being dispersed within the base composition.
